# EUROPEAN PATENT APPLICATION

(11) **EP 2 236 993 A1**
(43) Date of publication of application: **06.10.2010**
(21) Application number: 09157174.5
(22) Date of filing: 02.04.2009
(51) Int. Cl.: G01F 1/66

(54) **Flow meter with housing and separate unit**

(71) Applicant: KAMSTRUP A/S, 8660 Skanderborg (DK)
(72) Inventor: Nielsen, Søren Tønnes, 8355, Solbjerg (DK); Laursen, Peter Schmidt, 8660, Skanderborg (DK); Skallebæk, Anders, 8660, Skanderborg (DK)
(74) Representative: Plougmann & Vingtoft A/S

(57) **Abstract**

An ultrasound flow meter for ultrasonic measurement of a fluid flow, the meter comprising a housing with a measuring tube inside, and a mechanically separate unit 500 arranged in relation to the housing. The mechanically separate unit 500 comprises at least one ultrasound transducer 506 and a circuit board 502 with an electronic circuit 504 arranged for operating the at least one ultrasound transducer 506, wherein at least one fixing member, such as solder or clips, is attached to the circuit board 502. The fixing member serves to limit relative movement between the circuit board 502 and the ultrasound transducer 506. The fixing member may further serve to electrically connect the transducer 506 to the circuit board 502. In addition, the invention provides a method of manufacture of said ultrasound flow meter, preferably including testing the mechanically separate unit before attaching the mechanically separate unit to the housing.

## Description

### FIELD OF THE INVENTION

The invention relates to an ultrasound flow meter for ultrasonic measurements of fluid flow. In particular the invention provides an ultrasound flow meter with a housing and a mechanically separate unit comprising at least one ultrasound transducer and a circuit board with a measurement circuit.

### BACKGROUND OF THE INVENTION

Normally, ultrasound flow meters suited for measuring a fluid flow in connection with charging of a consumed quantity (e.g. heat, cooling, water or gas) will have a housing, which can be metallic or polymeric, with a cavity in the form of a through-going hole for receiving a fluid flow to be measured. Connection means to other fluid flow elements are present in each of the housing ends.

In the housing a number of ultrasound transducers are installed for measuring the velocity of the fluid flow. In most flow meters two ultrasound transducers are used for sending, respectively receiving, an ultrasound signal, but versions with one ultrasound transducer, as well as versions with more than two ultrasound transducers, are seen. Furthermore, an electronic circuit for operation of the ultrasound transducers typically mounted in a separate enclosure and fastened to the housing. Most often the electronic circuit is implemented on a Printed Circuit Board (PCB).

The ultrasound transducers can be electrically connected to the electronic control circuit in various ways. Common methods being soldering ends of connection wires onto the ultrasound transducers directly and onto the PCB respectively, or using a plug connection between the same. However, one common problem with prior art ultrasound flow meters is that, during manufacturing, it is required that flow meter is completely assembled before a meaningful test of the flow meter can be performed. Species that fail in such test procedure are thus revealed at a late state in the manufacturing process, and thus assembly time is wasted for such species.

### SUMMARY OF THE INVENTION

In view of the above, it may be seen as an object of the present invention to provide an improved ultrasound flow meter for ultrasonic measurement of a fluid flow and an improved method of manufacturing of a flow meter which enables testing prior to final assembly.

Accordingly, the invention provides, in a first aspect, an ultrasound flow meter arranged to measure a flow rate of a fluid flowing through a measuring tube, the flow meter comprising
- a housing with the measuring tube arranged inside, and
- a mechanically separate unit arranged in relation to the housing, the mechanically separate unit comprising
- at least one ultrasound transducer, and
- a circuit board with an electronic circuit arranged for operating the at least one ultrasound transducer, wherein at least one fixing member is attached to the circuit board, wherein the fixing member serves to limit relative movement between the circuit board and the ultrasound transducer, such as the fixing member serving to fix the ultrasound transducer to the circuit board.

Thus, an improved ultrasound flow meter for ultrasonic measurement of a fluid flow is provided. In particular, it may be seen as an improvement that integration of parts involved with the positioning and the mounting of the ultrasound transducer is achieved, as the circuit board, together with the fixing member, serves as both position means and holder for the ultrasound transducers. This is essential for effective production, since the mechanically separate unit including transducer(s) and circuit board can be tested before final assembly of the mechanically separate unit and the housing. Hereby, the production cost can be lowered since failing species are revealed at an early state, and in addition the rather complex handling of wires and connecting of wires between transducer(s) and circuit board in automated manufacturing has been eliminated. Also, a more reliable flow meter can be achieved due to fewer parts and connections. Moreover, this can also lead to an increase in lifetime of the ultrasound flow meter. In addition, higher precision is possible as a result of reduced tolerances.

The ultrasound transducer may be kept in position by the fixing member outside a plane defined by the circuit board, such as on a surface of the circuit board. The circuit board might have a through going hole in an area on the circuit board corresponding to a projection of the transducer onto the plane defined by the circuit board. Alternatively, there might be a slit protruding from an edge of the circuit board into the area on the circuit board corresponding to a projection of the transducer onto the plane defined by the circuit board. An advantage of this is that the effect on the fixing member, such as solder or clips, of thermal expansion of respectively circuit board and ultrasound transducer becomes less detrimental. Another advantage of this is that it is possible to apply a contact force onto the transducer in a direction orthogonal to the circuit board through the circuit board without applying a possibly damaging force directly onto the circuit board.

Preferably, the circuit board comprises an edge shaped to fit at least a part of the ultrasound transducer, and the ultrasound transducer is kept in position by the fixing member such that a plane defined by the circuit board intersects through the ultrasound transducer, when mounted for normal operation. Said edge might be the edge of a cavity in the circuit board or a through-going hole through the circuit board, with a size and shape matching an outer size and shape of the ultrasound transducer. Alternatively, the edge is an outer edge which is at least partly shaped to match a size and shape of an edge of the ultrasound transducer.

In some embodiments, said edge of the circuit board serves, together with the fixing member, to fix the position of the ultrasound transducer in relation to the circuit board. An advantage of this is that contact forces between the edge and the transducer participates in fixing the transducer relative to the circuit board. Possibly, an interfacial layer, such as glue or solder, may be a part of the fixing member and participate in mediating this effect.

In a preferred embodiment, said edge is an edge of a through-going hole through the circuit board, wherein the through-going hole is shaped to fit a size of the ultrasound transducer.

In another embodiment, the fixing member comprises an electrically conductive portion, such as metallic clips, solder or conducting glue, and wherein this electrically conductive portion serves to electrically connect the circuit board and the ultrasound transducer. An advantage of this is that no separate wires are necessary for electrical connection, and consequently, the process step of mounting wires is eliminated. Handling of wire connections in an automated assembly line is a subject of difficulty, and hence it is advantageous to eliminate this step.

In yet another embodiment, separate first and second parts of the fixing member serve to provide respective first and second electrical connections between the ultrasound transducer and the circuit board.

Preferably, the fixing member comprises one or more clips attached to the circuit board, such as one or more metal clips.

In a preferred embodiment, the fixing member comprises one or more solderings serving to attach the ultrasound transducer to the circuit board. The solderings might be solderings done using surface- mount technology. Components mounted using surface-mount technology are commonly referred to as surface mounted components, and devices made using surface-mount technology are commonly known as surface mounted devices. From hereon, however, the technology in general is referred to by the term SMD. An advantage of using SMD solderings for mounting of the ultrasound transducers is that the positioning of the transducers is done with the accuracy of the SMD machinery, which is in the order of fractions of a millimetre, such as below 1.0 mm, such as below 0.1 mm, such as below 0.01 mm. Furthermore, the electrical connection between the ultrasound transducer and the circuit board can be established in the process of SMD mounting.

The ultrasound flow meter might comprise first and second ultrasound transducers fixed to the circuit board by respective first and second parts of the fixing member. The circuit board and the fixing member might serve to fix the first and second ultrasound transducers in position relative to each other, and wherein a distance between the first and second ultrasound transducers matches a distance between corresponding first and second transducer receiving positions of the housing. An advantage of this is that once the transducers are fixed to the circuit board, the positioning of the transducers relative to the housing can be done when fixing the circuit board relative to the housing. Fixing of the transducers to the circuit board can be done with high precision, such as with the precision obtained in an SMD mounting process. Furthermore, if the distance between transducers matches a distance between transducer receiving positions of the housing, the alignment of the transducers to the transducer receiving positions of the housing can be carried out together with the fixing of the circuit board in relation to the housing. In a special embodiment, the two ultrasound transducers share a common protection membrane, e.g. a metal sheet. More specifically, such common protection membrane may form part of a water-tight casing for housing the mechanically separate unit.

The ultrasound flow meter might have its housing formed by metal, such as brass or stainless steel. In another embodiment, the ultrasound flow meter has its housing formed by a polymeric material. An advantage of a polymeric material is that it is possible to avoid openings in the housing for the ultrasound transducers, since an ultrasonic signal can be transmitted through a polymer material with the right physical and dimensional properties. Sealing can thus be eliminated, resulting in improved imperviousness of the flow meter, and the pressure forces from the fluid flow will not load the ultrasound transducers but the flow meter housing only.

In a second aspect, the invention provides a consumption meter comprising a flow meter according to the first aspect, wherein the consumption meter is one of: a heating meter, a cooling meter, a water meter, or a gas meter.

In a third aspect, the invention provides the manufacturing of an ultrasound flow meter, the method comprising
- forming a mechanically separate unit comprising an ultrasound transducer and a circuit board with an electronic circuit used for controlling the ultrasound transducer by mounting the ultrasound transducer relative to the circuit board by means of a fixing member serving to limit relative movement between the ultrasound transducer and the circuit board, and
- mounting the mechanically separate unit to a housing arranged for fluid flow.

An advantage of this assembly procedure is that it can be very easily performed and that it can be automated. As only few steps and handling of only few components are required, the process can be carried out in short time.

A specific method of manufacturing comprises mounting the ultrasound transducer to the circuit board by means of one or more clips, such as metal clips. This assembly procedure is simple yet with good positioning accuracy. Few different components are used, and few assembly procedures are involved.

A preferred method of manufacturing comprises soldering the ultrasound transducer to the circuit board, such as by means of an SMD soldering process. By SMD positioning of the ultrasound transducer the high accuracy of the SMD machinery is achieved. The accuracy of positioning is in the order of fractions of a millimetre, such as below 1.0 mm, such as below 0.1 mm, such as below 0.01 mm. Another advantage is that the electrical connection between the circuit board and the at least one ultrasound transducer can be established in connection with mounting.

Another preferred method of manufacturing comprises a step of testing a function of the mechanically separate unit prior to mounting the mechanically separate unit to the housing arranged for fluid flow. This method of manufacturing is advantageous since testing the function of the mechanically separate unit before mounting the mechanically separate unit to a housing arranged for fluid flow can reveal malfunction. In case of malfunction the product can be scrapped before the cost of the assembly procedure is added and this potentially lowers the overall production costs.

Yet another preferred method of manufacturing includes mounting first and second ultrasound transducers relative to the circuit board by means of respective first and second parts of the fixing member.

When referring to an advantage, it must be understood that this advantage may be seen as a possible advantage provided by the invention, but it may also be understood that the invention is particularly, but not exclusively, advantageous for obtaining the described advantage.

It is appreciated that advantages described for the first aspect applies as well for the second and third aspects. Further, embodiments of the first aspects may in any way be combined with the second and third aspect.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates a mechanically separate unit comprising a circuit board and two ultrasound transducers positioned within a plane defined by the circuit board,
Fig. 2 illustrates a circuit board and two ultrasound transducers prior to assembly,
Fig. 3 illustrates a mechanically separate unit comprising a circuit board and two ultrasound transducers mounted outside a plane of the circuit board,
Fig. 4 illustrates a circuit board and two ultrasound transducers prior to assembly,
Figs. 5a and 5b illustrate a circuit board and ultrasound transducers before and after assembly into a mechanically separate part consisting of circuit board and ultrasound transducers mounted in an SMD process,
Fig. 6 illustrates an ultrasound flow meter with a flow meter housing made of metal and a mechanically separate unit comprising a circuit board and two ultrasound transducers,
Fig. 7 shows an exploded view of the ultrasound flow meter illustrated in Fig. 6,
Fig. 8 illustrates an ultrasound flow meter with a flow meter housing made of polymer and a mechanically separate part comprising a circuit board and two ultrasound transducers, and
Fig. 9 shows an exploded view of the ultrasound flow meter illustrated in Fig. 8.

### DESCRIPTION OF EMBODIMENTS

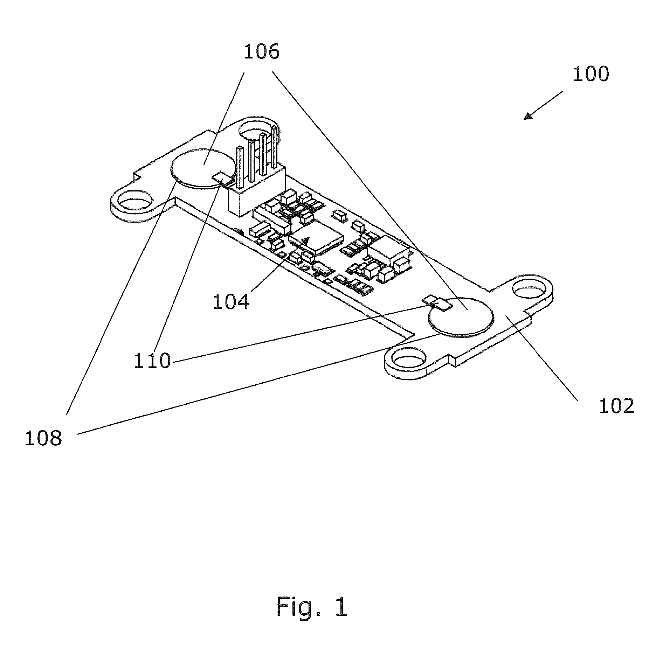

Fig. 1 shows a perspective view of a mechanically separate unit 100 comprising a circuit board 102 with an electronic circuit 104 with SMD components and with piezoelectric ultrasound transducers 106 mounted such that a plane defined by the circuit board intersects through the ultrasound transducers. The ultrasound transducers in the shown embodiment are mounted in respective through-going holes 108 of the circuit board with an edge shaped to fit a part of the ultrasound transducers. However, other embodiments could have cavities, which are not through-going, or have planar surfaces without holes. The edge of the circuit board fixes the position of the ultrasound transducer in relation to the circuit board. Furthermore, metallic clips form first part of a fixing member 110 which also serves to fix the position of the ultrasound transducers in relation to the circuit board. The first part of the fixing member is electrically conductive and serves to electrically connect the circuit board and the ultrasound transducers.

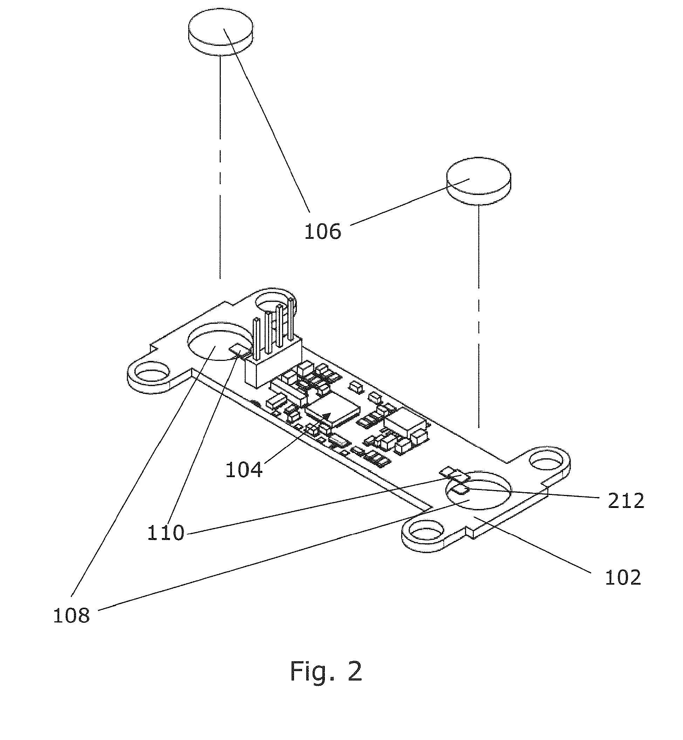

Fig. 2 shows a perspective view of a circuit board 102 as in Fig. 1, but prior to mounting of the ultrasound transducers 106 onto the circuit board 102. A first part of a fixing member 110 also serves to fix the position of the ultrasound transducers in relation to the circuit board 102. Furthermore, metallic clips form a second part of a fixing member 212. The separate first and second parts of the fixing member serve to provide first and second electrical connections between the ultrasound transducers and the circuit board, and thus form the connections necessary for driving the ultrasound transducer by applying a temporally varying voltage, such as an AC voltage, across each transducer.

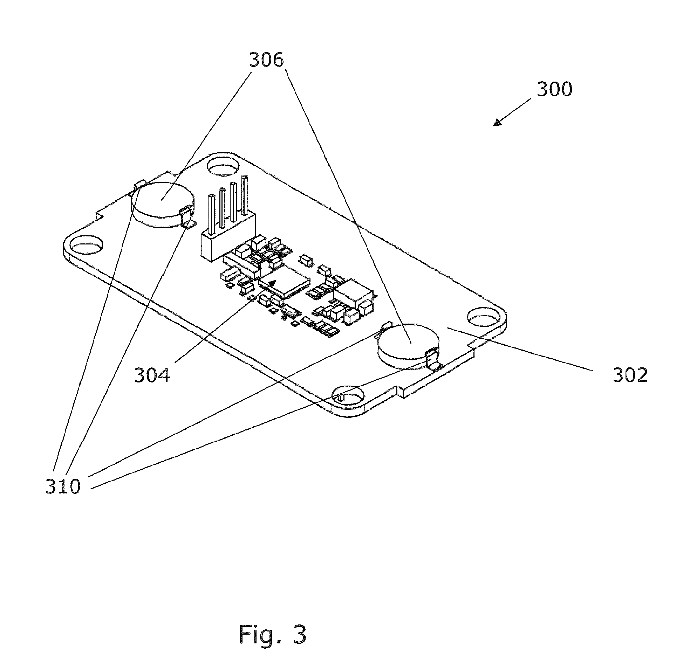

Fig. 3 shows another mechanically separate unit 300 comprising a circuit board 302 with an electronic circuit 304 and with ultrasound transducers 306 mounted outside a plane defined by the circuit board. The ultrasound transducers in the shown embodiment are mounted on top of respective through-going holes of the circuit board, however, other embodiments could have cavities which are not through-going, or have planar surfaces without holes. Metallic clips 310 serve as fixing members and electrical connections.

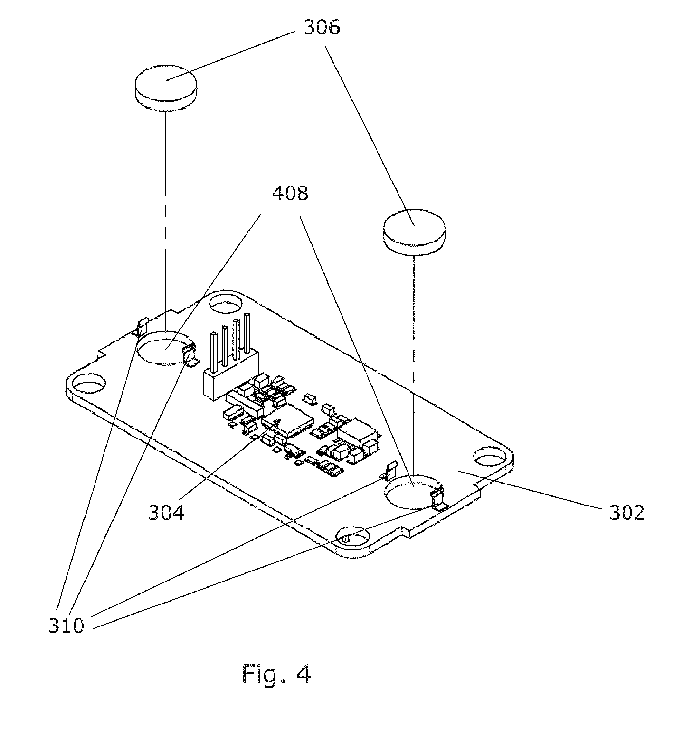

Fig. 4 shows a perspective view of a circuit board 302 as in Fig. 3, but prior to mounting the ultrasound transducers 306 in relation to the circuit board 302. The ultrasound transducers are mounted over respective through-going holes 408 of the circuit board, in order to allow a contact force to be applied on each of the ultrasound transducers, through the plane of the circuit board, without applying the force through the material of the circuit board.

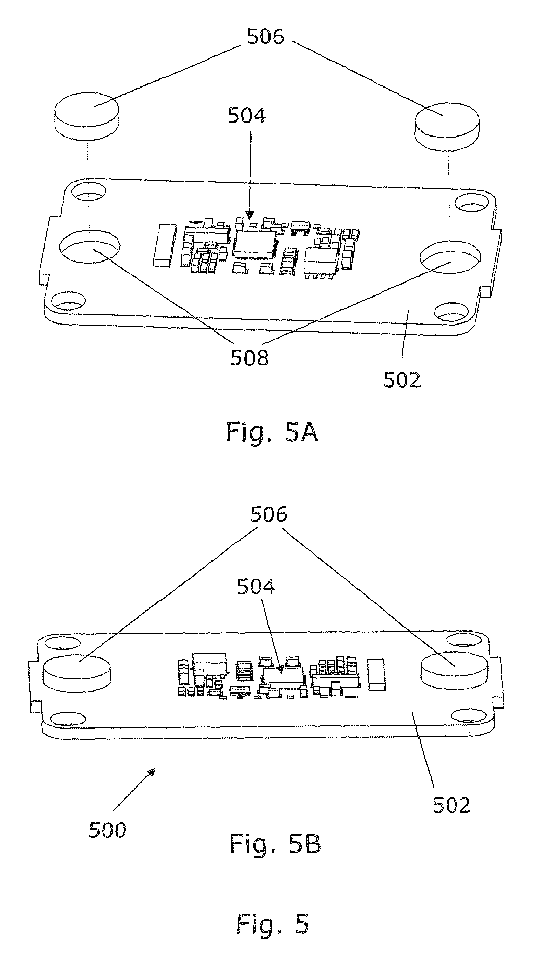

Fig. 5a shows two ultrasound transducers 506 and a circuit board 502 with an electronic circuit 504 prior to fixing the transducers on the circuit board in an SMD process. In a preferred embodiment suited for SMD fixing of the transducers, the circuit board is provided with though-going holes 508. However, other embodiments may have cavities, which are not through-going, or plane surfaces without holes or cavities.

Fig. 5b shows a mechanically separate unit 500 comprising a circuit board 502 with an electronic circuit 504 and two ultrasound transducers 506, where the transducers 506 are fixed on the circuit board 502 in an SMD process. Solder between the circuit board 502 and each of the transducers 506 serves to mechanically fix the transducers 506 to the circuit board 502. Furthermore, the electrically conducting solder connects each of the transducers 506 electrically to the electronic circuit 504.

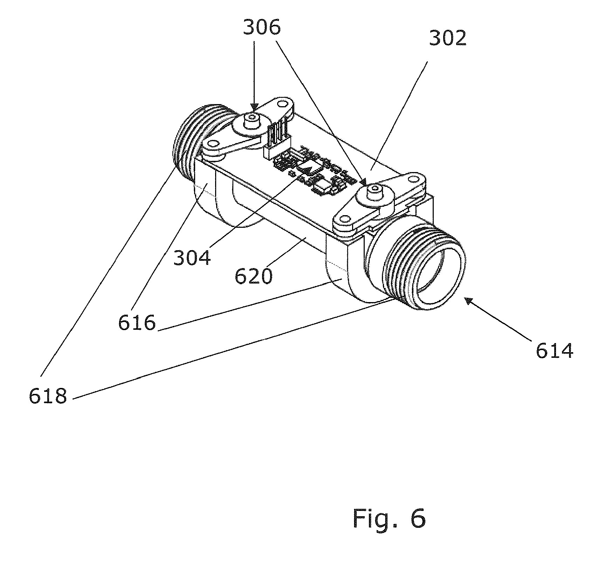

Fig. 6 shows a perspective view of an ultrasound flow meter with a metallic flow meter housing 620, with a measuring tube 614 adapted for fluid flow inside, and a mechanically separate part comprising a circuit board 302 with an electronic circuit 304 and two piezoelectric ultrasound transducers 306. The mechanically separate unit comprising the transducers and the circuit board is fixed to the housing 620 with bracing 616 in order to ensure that enough force is applied to the transducers in the direction towards a centre line of the measuring tube in the housing in order to counteract the force applied in the opposite direction from the pressure of the fluid inside the housing during operation. Each end of the flow meter housing 620 is provided with threading 618 in order to facilitate mounting onto adjacent pipelines. The electronic circuit 304 is provided with external connections in the form of pins enabling the electrical connection to other electronic circuits, such as calculator units, power supplies and telecommunication units. Alternatively, a wireless connection could be used.

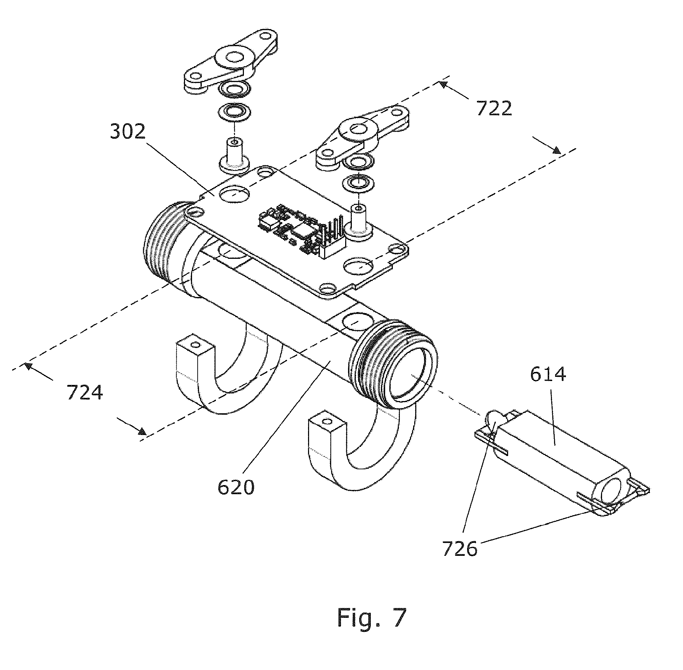

Fig. 7 shows an exploded view of an ultrasound flow meter similar to the ultrasound flow meter shown in Fig. 6. The figure shows the components of the ultrasound flow meter, including bracing components, ultrasound transducers, the circuit board 302 and the flow meter housing 620. Furthermore, two reflector units 726 are shown, with measuring tube engagement means for engaging with the measuring tube 614. A distance 722 is shown, which represents a distance between the positions on the circuit board where the first and second of the two ultrasound transducers are fixed. The distance 722 is substantially similar to the distance 724, the latter representing a distance between a first and a second transducer receiving position of the housing.

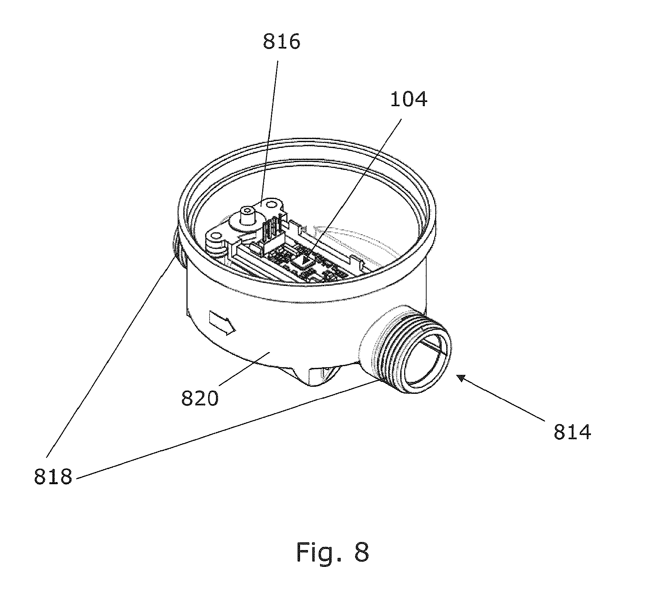

Fig. 8 shows a perspective view of an ultrasound flow meter with a polymeric flow meter housing 820, with a measuring tube 814 adapted for fluid flow inside, and a mechanically separate part comprising a circuit board with an electronic circuit 104 and piezoelectric ultrasound transducers. The polymeric flow meter housing 820 is monolithically formed in a die casting process and is enclosing a cavity suited for containing components, such as the electronic circuit 104. The mechanically separate unit comprising the transducers and the circuit board is clamped to the housing 820 with bracing 816. Each end of the flow meter housing is provided with threading 818 in order to facilitate mounting onto adjacent pipelines. The electronic circuit 104 is provided with external connections in the form of pins enabling the electrical connection to other electronic circuits, such as calculator units, power supplies and telecommunication units. Alternatively, a wireless connection could be used.

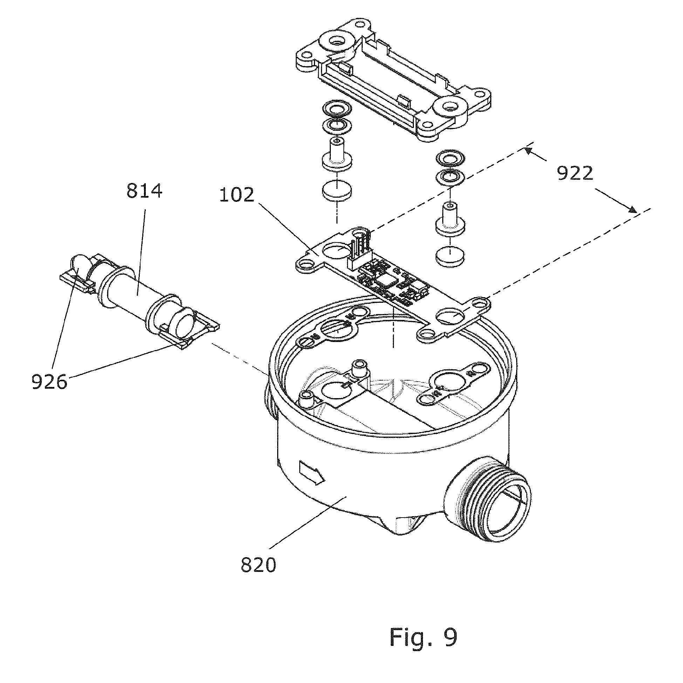

Fig. 9 shows an exploded view of an ultrasound flow meter similar to the ultrasound flow meter shown in Fig. 8. The figure shows the components of the ultrasound flow meter, including bracing components, ultrasound transducers, the circuit board 102the flow meter housing 820. Furthermore, two reflector units 926 are shown, with measuring tube engagement means for engaging with the measuring tube 814. A distance 922 shown, which represents a distance between the positions on the circuit board where the first and second of the two ultrasound transducers are fixed. The distance 922 is substantially similar to the distance a distance between a first and second transducer receiving position of the housing.

To sum up the invention provides an ultrasound flow meter for ultrasonic measurement of a fluid flow, the meter comprising a housing with a measuring tube inside, and a mechanically separate unit 500 arranged in relation to the housing. The mechanically separate unit 500 comprises at least one ultrasound transducer 506 and a circuit board 502 with an electronic circuit 504 arranged for operating the at least one ultrasound transducer 506, wherein at least one fixing member, such as solder or clips, is attached to the circuit board 502. The fixing member serves to limit relative movement between the circuit board 502 and the ultrasound transducer 506. The fixing member may further serve to electrically connect the transducer 506 to the circuit board 502. In addition, the invention provides a method of manufacture of said ultrasound flow meter, preferably including testing the mechanically separate unit before attaching the mechanically separate unit to the housing.

Although the present invention has been described in connection with preferred embodiments, it is not intended to be limited to the specific form set forth herein. Rather, the scope of the present invention is limited only by the accompanying claims.

In this section, certain specific details of the disclosed embodiments are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. An ultrasound flow meter arranged to measure a flow rate of a fluid flowing through a measuring tube, the flow meter comprising
- a housing (620) with the measuring tube (614) arranged inside, and
- a mechanically separate unit (100, 300) arranged in relation to the housing, the mechanically separate unit (100, 300) comprising
- at least one ultrasound transducer (106, 306), and
- a circuit board (102, 302) with an electronic circuit (104, 304) arranged for operating the at least one ultrasound transducer (106, 306), wherein at least one fixing member (110, 310) is attached to the circuit board (102, 302), wherein the fixing member (110, 310) serves to limit relative movement between the circuit board (102, 302) and the ultrasound transducer (106, 306), such as the fixing member (110, 310) serving to fix the ultrasound transducer (106, 306) to the circuit board (110, 310).

2. Ultrasound flow meter according to any of the preceding claims, wherein the ultrasound transducer (106, 306) is kept in position by the fixing member (110, 310) outside a plane defined by the circuit board (102, 302, such as on a surface of the circuit board (102, 302).

3. Ultrasound flow meter according to claim 1, wherein the circuit board (102, 302) comprises an edge (108, 308) shaped to fit at least a part of the ultrasound transducer (106, 306), and wherein the ultrasound transducer (106, 306) is kept in position by the fixing member (110, 310) such that a plane defined by the circuit board (102, 302) intersects through the ultrasound transducer (106, 306), when mounted for normal operation.

4. Ultrasound flow meter according to claim 3, wherein said edge (108, 308) of the circuit board serves, together with the fixing member (110, 310), to fix the position of the ultrasound transducer (106, 306) in relation to the circuit board (102, 302).

5. Ultrasound flow meter according to claim 3 or 4, wherein said edge is an edge of a through-going hole (108, 308) through the circuit board (102, 302), wherein the through-going hole (108, 308) is shaped to fit a size of the ultrasound transducer (106, 306).

6. Ultrasound flow meter according to any of the preceding claims, wherein the fixing member (110, 310) comprises an electrically conductive portion, and wherein this electrically conductive portion serves to electrically connect the circuit board (102, 302) and the ultrasound transducer (106, 306).

7. Ultrasound flow meter according to claim 6, wherein separate first and second parts of the fixing member (110, 310) serve to provide respective first and second electrical connections between the ultrasound transducer (106, 306) and the circuit board (102, 302).

8. Ultrasound flow meter according to any of the preceding claims, wherein the fixing member (110, 310) comprises one or more clips attached to the circuit board (102, 302), such as one or more metal clips.

9. Ultrasound flow meter according to any of the preceding claims, wherein the fixing member (110, 310) comprises one or more solderings serving to attach the ultrasound transducer (106, 306) to the circuit board (102, 302).

10. Ultrasound flow meter according to any of the preceding claims, comprising first and second ultrasound transducers (106, 306) fixed to the circuit board (102, 302) by respective first and second parts of the fixing member (110, 310).

11. Ultrasound flow meter according to claim 10, wherein the circuit board (302) and the fixing member (310) serve to fix the first and second ultrasound transducers (306) in position relative to each other, and wherein a distance (722) between the first and second ultrasound transducers (306) matches a distance (724) between corresponding first and second transducer receiving positions of the housing (620).

12. Ultrasound flow meter according to any of the preceding claims, wherein the housing (620, 820) is formed by metal, such as brass or stainless steel, or by a polymeric material.

13. Consumption meter comprising a flow meter according to any of claims 1-12, wherein the consumption meter is one of: a heating meter, a cooling meter, a water meter, or a gas meter.

14. A method of manufacturing an ultrasound flow meter, the method comprising
- forming a mechanically separate unit comprising an ultrasound transducer and a circuit board with an electronic circuit used for controlling the ultrasound transducer by mounting the ultrasound transducer relative to the circuit board by means of a fixing member serving to limit relative movement between the ultrasound transducer and the circuit board, and
- mounting the mechanically separate unit to a housing arranged for fluid flow.

15. Method according to claim 14, comprising mounting the ultrasound transducer to the circuit board by means of one or more clips, such as metal clips.

16. Method according to claim 14 or 15, comprising soldering the ultrasound transducer to the circuit board, such as by means of a Surface Mounting soldering process.

17. Method according to any of claims 14-16, comprising a step of testing a function of the mechanically separate unit prior to mounting the mechanically separate unit to the housing arranged for fluid flow.

18. Method according to any of claims 14-17, comprising mounting first and second ultrasound transducers relative to the circuit board by means of respective first and second parts of the fixing member.
